# EUROPEAN PATENT APPLICATION

(11) **EP 2 819 007 A1**
(43) Date of publication of application: **31.12.2014**
(21) Application number: 13305925.3
(22) Date of filing: 28.06.2013
(51) Int. Cl.: G06F 9/455, G06F 9/44

(54) **Method for managing an application running on an operating system from another operating system**

(71) Applicant: Orange, 75015 Paris (FR)
(72) Inventor: Ahmad, Zaheer, Southal London Surrey UB12UN (GB); Prokopi, Maria, Richmond London Surrey TW10 6PQ (GB); Mahmood, Tahir, London E11 4EQ (GB); Qureshi, Mobeen, Guildford London Surrey GU2 9UA (GB)

(57) **Abstract**

A hypervisor intermediate layer executed by an electronic device and interfaced with at least two operating systems (OS) with means to receive a message from a first OS, said message comprising an indication on an application to be executed in a second OS, send a message to the second OS, the message comprising a request to execute the application according to preset execution parameters, receive a message from the second OS comprising an indication that the application is being executed in a Graphical User Interface of the second OS according to the preset execution parameters, send to a hardware layer of the electronic device a command to display the second OS Graphical User Interface.

## Description

### FIELD OF THE PRESENT SYSTEM:

The invention relates generally to the field of virtual machines and more specifically to the execution of an application designed for an Operating System (OS) accessed through the user interface of another OS.

### BACKGROUND OF THE PRESENT SYSTEM:

Hardware virtualization or platform virtualization refers to the creation of a virtual machine that acts like a real computer with an operating system (OS). Software executed on these virtual machines is separated from the underlying hardware resources. In hardware virtualization, the host machine is the actual machine on which the virtualization takes place, and the guest machine is the virtual machine. The words host and guest are used to distinguish the software that runs on the physical machine from the software that runs on the virtual machine. The software or firmware that creates and manages a virtual machine on the host hardware is called a hypervisor or Virtual Machine Manager *(Wikipedia).* A virtual machine (VM) is a software implemented abstraction of the underlying hardware, which is presented to the application layer of the system. Virtual machines may be based on specifications of a hypothetical computer or emulate the computer architecture and functions of a real world computer. Virtual machines are separated or isolated one from the others.

A virtual machine provides a system platform which supports the execution of an operating system (OS) by emulating hardware architecture. Using Multiple OS environments can co-exist on the same computer, in strong isolation from each other.

A hypervisor or virtual machine monitor (VMM) is a piece of computer software, firmware or hardware that creates and runs virtual machines, managing the different OS. An electronic device on which a hypervisor is running one or more virtual machines is defined as a host machine. Each virtual machine is called a guest machine. The hypervisor presents the guest operating systems with a virtual operating platform and manages the execution of the guest operating systems. Thus, multiple instances of a variety of operating systems, each hosted on a virtual machine, may share the virtualized hardware resources (*Wikipedia*).

Use of such virtualization technologies in embedded electronic devices such as set top box, smart phones or laptops is increasing. Hypervisor or VMM (Virtual Machine Monitor) is used to create multiple isolated (virtual) areas inside the electronic device. There are mainly two types of hypervisors: Type 1 and Type 2 hypervisors. Hypervisor Type 1 runs directly on the host's hardware to control the hardware and to manage guest operating systems (more precisely, the virtual machines hosting - executing - said guest OS). Hypervisor Type 1 can be seen as an interface layer between the different virtual machines and the hardware layer. Hypervisor Type 2 runs within a conventional operating system environment. In other words, a hypervisor Type 2 is executed in an OS and has no direct access to the hardware layer.

Both hypervisor Type 1 and hypervisor Type 2 trap the instructions sent by the applications or OS layer and allocate resources of underlying hardware accordingly, either directly or through another OS. A typical use case of hypervisor in mobile phones is to allow corporate BYOD (Bring your own device) policy. Such mobile phones, or more generally electronic device, would be called hereafter dual persona phone, as such phones conciliate business and private environments. In dual persona phone, or more generally in dual persona electronic device, two OS can be run in the same electronic device. Thus, with BYOD policy, an employee does not have to manage two different electronic devices. That is to say, an employee does not need to manage one phone provided by the company and another private phone. Rather a secure OS is installed jointly with another OS on the electronic device or phone. This secure OS is controlled by the corporate IT department and, through the use of the hypervisor to run the two OS, becomes a corporate phone. In particular, the data storage and the installation of an application on the secure OS can be controlled by the IT department of the enterprise implementing the secure use of BYOD electronic device according to the company policy. Meanwhile, the user is free to use the other OS according to needs, knowing that any malware or virus that may affect this OS will not affect the secure OS, thus will not endanger company security. The electronic device or phone, through the secure OS running on it, corresponds to security policy set by the company.

This advantageously suppress the need for an employee to possess, carry, charge, parameter, two phones, or, more generally two electronic devices for business and personal needs (indeed, same solution may be applied to a tablet, laptop, ...).

However, the user has to switch from one environment to another according to his need. This means that the user has to switch from the non secure OS to the secure OS - and vice versa - to be able to use the enterprise or the personal OS - that is to say the different applications installed in the two OS - on the phone. This could be seen as a regression for a user used to access all its application from a same OS. Worst, the complexity of switching between two OS may drive back users from such solution, especially if the user interfaces of the two OS are different as the user needs to learn and use two user interface logics, knowing that sometimes the user interface logics of two OS may be quite different or even contradictory. This could be quite an issue for a user to switch continuously between two different user interface logic, especially if one of the two OS is not used very often so the user may not be able to get the good habits.

Indeed, there is a need to improve the management of several OS running on a same electronic device, especially to facilitate the execution of an application in such context.

### SUMMARY OF THE PRESENT SYSTEM:

It is an object of the present system to overcome disadvantages and/or make improvements in the prior art

Present system relates to a hypervisor intermediate layer executed by an electronic device and interfaced with at least two operating systems (OS) with means to receive a message from a first OS, said message comprising an indication on an application to be executed in a second OS, send a message to the second OS, the message comprising a request to execute the application according to preset execution parameters, receive a message from the second OS comprising an indication that the application is being executed in a Graphical User Interface of the second OS according to the preset execution parameters and send to a hardware layer of the electronic device a command to display the second OS Graphical User Interface.

This system advantageously improves the user experience by masking the complexity of managing a second OS installed on an electronic device, allowing an application of the second OS to be launched from the first OS and hiding to the user the mechanism of switching between a first and a second OS. Indeed, a user with an electronic device with two OS, a first OS dedicated for personal application, and a second OS for business applications (said second OS possibly being managed by a company IT department) may launch business applications (that is to say applications installed on the second OS) seamlessly from the first OS (or personal OS).

The present system also relates to an electronic device comprising a display screen and executing a hypervisor intermediate layer interfaced to at least two operating systems (OS), the electronic device displaying a Graphical User Interface of a first OS on the display screen, the hypervisor intermediate layer with means to receive a message from the first OS, said message comprising indication on an application to be executed in a second OS environment, send a command to the application manager of the second OS to execute the application, the command comprising execution parameters, receive from the application manager of the second OS an indication that the application is being executed according to requested parameters and send to the hardware layer a command to display the second OS output display on the electronic device display screen..

Finally, one object of the invention concerns a computer program, in particular computer programs on or in an information medium or memory, suitable for implementing the method for managing an application executed in an OS from a first OS object of the invention. These programs can use any programming language, and be in the form of source code, binary code, or of code intermediate between source code and object code such as in a partially compiled form, or in any other desirable form for implementing the methods according to the invention.

The information medium may be any entity or device capable of storing the program. For example, the medium can comprise a storage means, such as a ROM, for example a CD ROM or a microelectronic circuit ROM, or else a magnetic recording means, for example a diskette (floppy disk) or a hard disk.

### BRIEF DESCRIPTION OF THE DRAWINGS:

The invention is explained in further detail, and by way of example, with reference to the accompanying drawings wherein:
FIG. 1 shows an exemplary illustration of an electronic device running two OS in accordance with known technologies;
FIG. 2 shows an exemplary illustration of an electronic device in accordance with an embodiment of present system;
FIG. 3 shows an exemplary flowchart for managing an application running on an operating system from another operating system according to an embodiment of the present system;
FIG. 4 shows an exemplary illustration of an electronic device in accordance with an embodiment of present system.

### DETAILED DESCRIPTION OF THE PRESENT SYSTEM:

The following are descriptions of illustrative embodiments that when taken in conjunction with the following drawings will demonstrate the above noted features and advantages, as well as further ones. In the following description, for purposes of explanation rather than limitation, illustrative details are set forth such as architecture, interfaces, techniques, element attributes, etc. However, it will be apparent to those of ordinary skill in the art that other embodiments that depart from these details would still be understood to be within the scope of the appended claims. Moreover, for the purpose of clarity, detailed descriptions of well known devices, circuits, tools, techniques and methods are omitted so as not to obscure the description of the present system. It should be expressly understood that the drawings are included for illustrative purposes and do not represent the scope of the present system. In the accompanying drawings, like reference numbers in different drawings may designate similar elements.

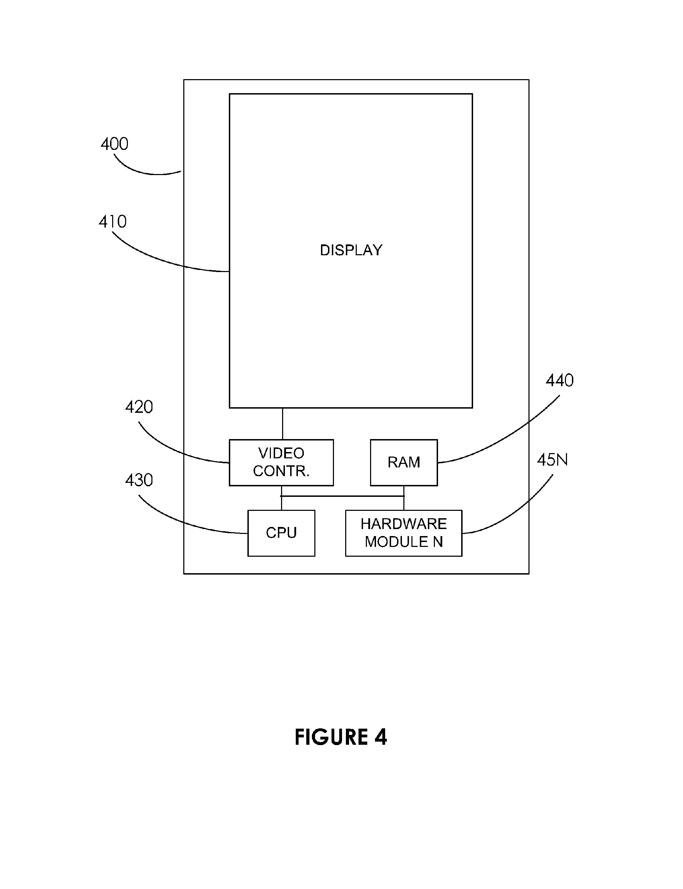

According to one embodiment of present system, a method can be implemented via applications or computer programs executed by an electronic device such as the electronic device 400 described in FIG. 4. For clarity sake, it should be understood hereafter that writing "the electronic device does something" means "an application executed on the electronic device does something, the application being executed in an OS running on the electronic device". Moreover, in our context of virtualization, it should be understood that a hypervisor layer can create and manage various virtual machines. Here, a virtual machine is a software implementation of a machine (hence "virtual") executing an operating system (OS). Thus a given OS is executed in a given virtual machine, all the virtual machines being managed by the hypervisor layer. Hereafter, notion of OS and virtual machine may be indifferently used, considering that there is a one-to-one relation between an OS and the virtual machine executing or hosting the same OS.

More globally, an electronic device (i. e. by the processor 430 of the electronic device 400) may run a hypervisor layer and host several virtual machines, each virtual machine hosting a different OS, each one being called guest OS.

FIG. 4 is an illustration of an exemplary electronic device 400 used in the present system. The electronic device 400 comprises at least a display element or screen 410, a processor or Central processing unit (CPU) 430, a video controller element 420, possibly a memory element 440 and different hardware element 45N. Hardware element or module 45N maybe any type of hardware element or module such as a hard drive, a network element, an input element (such as a keyboard, touch panel, microphone and so on) or any hardware commonly found in an electronic device such as, for example, but not limited to, a mobile device, a tablet, a phone or a laptop. The electronic device may comprise several hardware modules such as hardware module 45N, either similar (for example various hard drive) or distinct hardware module (hard drive, network elements, input elements, and so on).

The processor or CPU 430 can execute any applications or computer programs according to the embodiments of the present system. The man skilled in the art knows that processor 430 may comprise various processors or rely on distributed processor elements, possibly linked via a network element (hardware module 45N). In order to implement virtualization system on the electronic device, the CPU 430 executes a hypervisor layer, such a hypervisor layer managing different virtual machines executing or hosting different OS. It is to be noted that a same OS may be executed by different virtual machine, but in this case, they would be different instances and totally separated versions of the OS and thus will be considered as different OS hereafter.

The RAM (Random Access Memory) element 440 may be shared by any applications executed by the processor 430, which include applications such as the hypervisor layer and the different virtual machines, even if the virtual machine may access the RAM 440 through the hypervisor layer.

The video controller 420 can also be called a video card, a video adapter, a display card, a graphics card, a graphics board, a display adapter or a graphics adapter according to the context, this list of name being non limitative. Such video controller generates a feed of output images to the display 410 according to inputs instructions or data provided by the processor 430. An OS executed on the processor 430 may display via the video controller 420 a Graphical user Interface (GUI) on the display 410. The OS may be executed directly by the processor, or may be hosted on a virtual machine available among various one, said virtual machine being executed by the processor and managed by the hypervisor layer. When various OS hosted on their own virtual machine are executed at the same time by the processor 430 - in short: when various OS are executed - the video controller may display any video or feed of output image from any OS, according to instructions received from the hypervisor layer, meaning from the processor 430. In other words, when several OS are executed, the hypervisor layer controls which OS Graphical User Interface is displayed on the display or screen 410.

Video controller 420, RAM element 440, the CPU 430 and the different hardware module 45N are called the hardware layer of the electronic device 400. Such layer supports the execution of software such as the OS, the hypervisor layer or any application run by the processor 430, either directly, or virtually through a virtual machine.

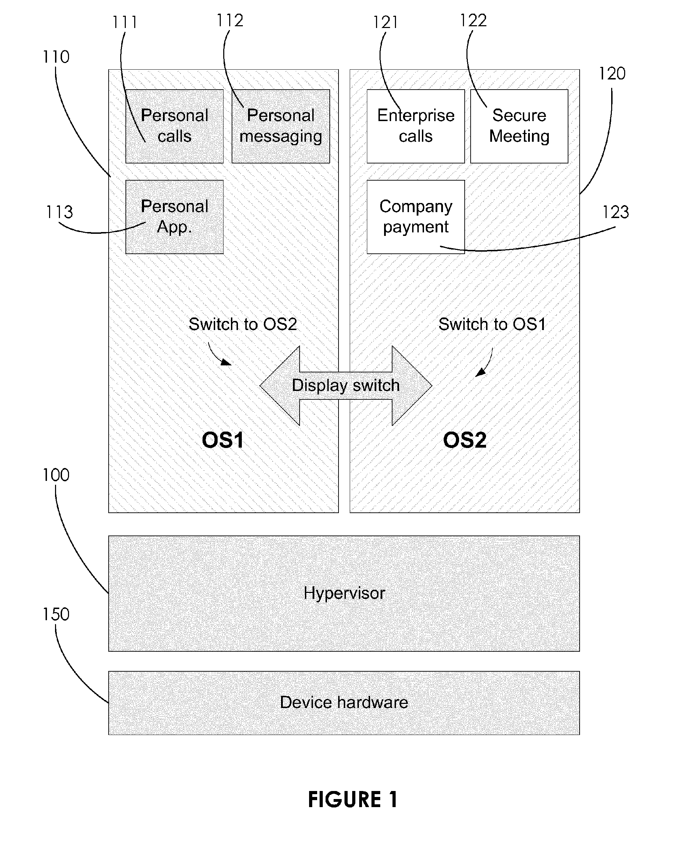

FIG. 1 is an illustration of a known hypervisor layer software. Device hardware 150 represents the different hardware elements or modules of an electronic device such as electronic device 400. Hypervisor 100 represents the hypervisor layer software executed by the processor 430. Here, for illustration, it should be considered that the hypervisor 100 manages two virtual machines. A first virtual machine hosts an OS called OS1, when a second virtual machine hosts another OS called OS2. OS1 and OS2 may be for example OS such as Windows XP™, Windows 8™, Android™, iOS™, GNU/Linux or any other OS. OS1 and OS2 are guest OS. The hypervisor layer main role is to manage the two different virtual machines hosting OS1 and OS2.

Element 110 represents the Graphical User Interface (GUI) of OS1. In the present illustration, the GUI of OS1 displays three icons or short cuts 111, 112 and 113 giving respectively access to three applications of OS1: "Personal calls" (111), "personal messaging" (112) and "Personal application" (113). By giving access, it should be understood that a user interaction with said icon may trigger the launch of the application associated with the icon. The icons can be seen as shortcuts to the execution of an application. Indeed, by selecting one of the three icons, a user may launch the associated application. In other words, selecting icon 112 launches "personal messaging" application. It should be reminded that here the applications associated to icons 111, 112 and 113 are executed by the OS1.

Element 120 represents the Graphical user Interface of OS2. Similarly to description of element 110, icons 121, 122 and 123 are respectively associated to three applications of OS2: "Enterprise calls" (121), "secure meeting" (122) and "company payment" (123).

The video controller of the electronic device 400 illustrated in FIG. 1 may render on the display element 410 either the GUI of OS1 or the GUI of OS2, depending on instructions provided by the hypervisor layer. OS1 and OS2 are two totally separate instances, each one being hosted within its own virtual machine. Virtualization technologies give the illusion for OS1 or OS2 that it is executed on a real hardware platform, whereas in fact a virtual hardware layer (comprising among others virtual elements a virtual display) is managed by the hypervisor layer. Consequently, the two OS have the illusion that they are executed on two separate electronic devices when they are in fact sharing same hardware elements of electronic device 400. The sharing of the only display 410 of the electronic device between the two OS is managed by the hypervisor layer. Each OS renders a different GUI to its virtual display and the hypervisor layer may decide which one of the two virtual displays should be displayed on the display 410. As the guest OS are isolated and hosted within virtual machine, no application executed from OS1 or OS2 can interact with other OS applications or software without the permission of the hypervisor layer. Thus, to switch display between the two OS1 and OS2, an application in OS1 interacts with the hypervisor layer, and then the hypervisor layer sends instructions to switch the display between OS1 or OS2. In other words, the hypervisor layer instructs selecting either the Graphical User Interface of OS1 or OS2 to be rendered by the video controller to the display. Due to natural isolation between the two OS brought by virtualization technique, no malware, viruses or error can be transmitted from the personal OS to the business OS (and vice versa).

In the other hand, going from one OS to the other is cumbersome. Moreover, if the Graphical User Interfaces of the two OS are different, the user may have difficulties to adapt.

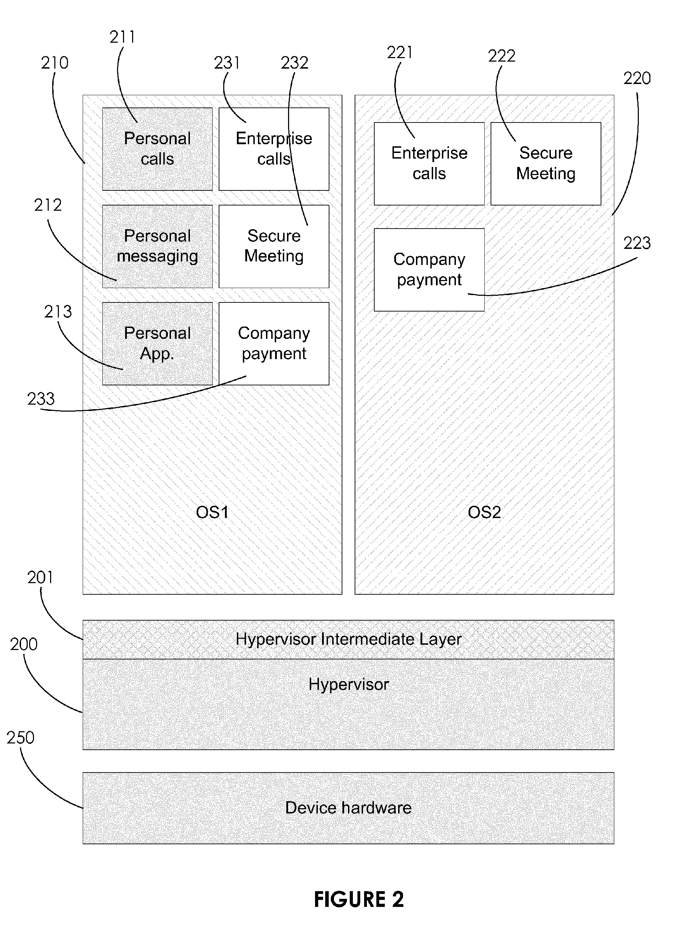

FIG. 2 shows an exemplary illustration of an electronic device in accordance with an embodiment of the present system. FIG. 2 represents the same schematic electronic device of FIG. 1 implementing one embodiment of the present system. Elements 2xx of FIG. 2 are similar to elements 1xx of FIG. 1. Hypervisor layer 200, similar to hypervisor layer 100 of FIG. 1 is modified in order to integrate a hypervisor intermediate layer 201. Such hypervisor intermediate layer 201 allows controlled communication between OS1 and OS2. In an embodiment of present system as illustrated in FIG. 2, icons 221, 222 and 223 (corresponding to icons 111, 112 and 113 of FIG.1) associated to applications of OS2 and displayed on OS2 GUI are also displayed on OS1 GUI as icons 231, 232 and 233. Thus, OS2 applications associated to these icons are directly accessible from OS1 by selecting a given icon. Indeed, as the icons associated to OS2 applications are displayed on OS1 GUI, a user may directly select these icons without having to first switch to OS2 like in the situation of FIG. 1.

In one complementary implementation of the present system, an application of OS2 selected from OS1 using the previously described icons 231, 232 or 233 may be executed in a full screen mode. As a direct consequence, the user may not be conscious that the selected application of OS2 is currently executed in another OS than OS1. This will hide the complexity of managing two OS to the user.

In order to keep some control on the security of the applications, as it will be explained later, a security policy may be implemented within the intermediate hypervisor layer in order to control or filter communications between OS1 and OS2. In a case of a mobile device, such security policy may be managed remotely by the network operator.

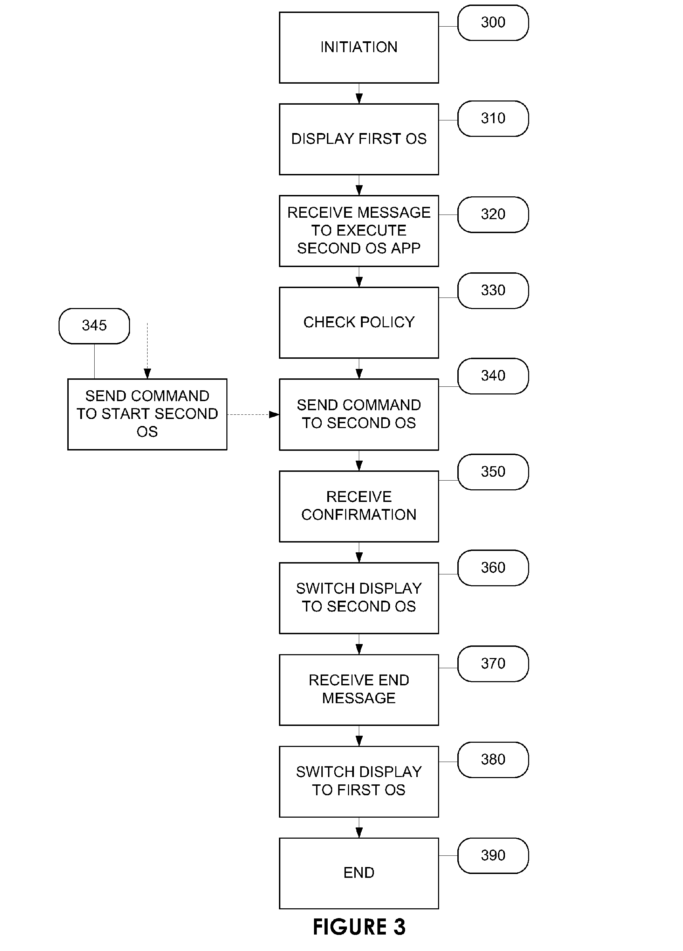

FIG. 3 shows an exemplary flowchart for managing an application running on an operating system from another operating system according to an embodiment of the present system.

In a first step 300, the system should be initiated. Considering an electronic device 400, it means that a hypervisor layer and at least two virtual machines should be installed on the electronic device. This step could be performed during the configuration of the electronic device by the device maker, or later, possibly remotely, by the network operator in case of a mobile device. Possibly, an enterprise IT department may also install the necessary software on the company fleet of devices. Complementarily, within a BYOD (Bring Your Own Device) policy, IT department may install the necessary softwares on each personal devices of the employees. Indeed, the IT department may control one of the two OS, which will be called the secure OS, while imposing no security restriction on the other OS, called personal OS. Secure OS would correspond to OS2 of FIG. 2 while personal OS would correspond to OS1 of FIG. 2.

The IT department may install on the secure OS (OS2) any company applications such as "Enterprise calls" (221), "secure meeting" (222) or "company payment" (223) applications as illustrated in FIG. 2 element 220. The man skilled in the art knows various methods to proceed to remote installation of applications. Relying on the hypervisor intermediate layer, IT department may install, either manually or automatically, icons or shortcuts of previously installed applications on the Graphical User Interface of the personal OS (OS1). Such icons or shortcuts could be considered as "dummy" icons as they are displayed on the GUI of the personal OS (OS1) but are associated to applications of the secure OS (OS2). Depending on the embodiment of present system, the hypervisor intermediate layer may be seen from the personal and secure OS as specific software like a device driver. That is to say that a specific device driver should be installed on the OS by the IT department. Indeed, hypervisor intermediate layer could be seen from the point of view of an OS as a virtual device accessed through the installed device driver.

In a step 310, the hypervisor layer sends an instruction to the video controller 420 to display the Graphical User Interface of OS1. Thus, the display or screen 410 displays the GUI of OS1 as illustrated in FIG. 2 element 210. The user of the electronic device may select one of the six icons 211, 212, 213, 231, 232 or 233 displayed on the GUI of the personal OS (OS). If the user selects one of the icons 211, 212 or 213, the personal OS (OS1) will execute an application associated to the selected icon (in short, a personal application) according to known behavior of a Graphical User Interface. But in order to access a business application (i. e. an application from the secure OS or OS2, managed by the company IT department), the user selects one of the three "dummy" icons 231, 232 or 233. This triggers the method object of present system. Indeed, when such icon 231, 232 or 233 is selected, the OS1 sends a message to the virtual device corresponding to the hypervisor intermediate layer, that is to say, to the hypervisor layer. The message comprises indication on the application selected by the user, i. e. the application to be launched or executed. The message may comprise preset execution parameters associated to the selected application. Execution parameters are input parameters used when an application is launched or executed. Execution parameters may include a login, a password or any parameter that will determine how the application is executed.

In a step 320, the hypervisor layer receives a message from the first OS (OS1), said message comprising indication on the application to be executed in the second OS (OS2).

In an optional step 330, the hypervisor layer checks the request to execute the application against a security policy to allow or prevent the further act. Indeed, security policy may be used to authorize or prohibit the execution of predetermined applications in the secure OS. Security policy may be managed by a company IT department, possibly remotely and frequently updated. This allows a control by a company IT department of the applications authorized to be run on the second OS (or secure OS) from the first OS (or personal OS). Security policy may also permit a checking of the preset execution parameters of the request, authorizing or prohibiting some execution parameters. When an execution parameter is against the security, the system may stop the process and display an error message, modify the execution parameter, replacing the execution parameter by an authorized execution parameters, send back a request to update the execution parameter or any other actions according to the different embodiment.

In a complementary embodiment, the execution parameters comprise a parameter to execute the application in a full screen mode in the second OS. Full screen mode means here that the applications, if applicable, should be displayed on the electronic device display element using all the available space. In other words, in full screen mode, an application GUI is hiding the OS GUI, using all the available place on the display or screen. Thus the user feels like he is still interacting with the OS1.

In another complementary embodiment of present system, the hypervisor may add, remove or replace some execution parameters according to the security policy. For example, the security policy may systematically add an execution parameter such as "full screen execution" to the applications.

If the security policy does not allow the execution of the application on the secure OS or if some execution parameters are prohibited, the method stops here. Possibly, an error message is displayed on the GUI of OS1 indicating which security policy rule was infringed. Optionally, the hypervisor layer may also send an instruction to the OS1 requesting to remove the icon associated to the non authorized application to prevent further attempt of accessing a non authorized application.

Otherwise, in a further step 340, the hypervisor layer sends a message to the secure OS (OS2), the message comprising a request to execute the application according to the execution parameters. Indeed, the hypervisor layer sends a message or command to the secure OS (OS2) with an indication of the application selected by the user in step 310 and possibly some execution parameters.

Optionally, in a step 345, the hypervisor, upon detection that the secure OS is not being executed may need to send a command to start the secure OS. In other words, if the secure OS is not running, the hypervisor layer may boot it.

Upon reception of the message sent in step 340, the secure OS executes or launches the selected application, possibly according to the execution parameters. Once completed, the secure OS sends back to the hypervisor layer a message indicating that the requested action has been performed.

Thus, in a step 350, the hypervisor layer receives a message from the secure OS comprising an indication that the application is being executed according to the requested execution parameters.

In further step 360, the hypervisor layer sends to the hardware layer 150 or 250 of the electronic device 400 a command to display the secure OS GUI. In this step, the hypervisor layer sends an instruction to the video controller to display the GUI of the secure OS. In other words, the hypervisor layer sends to the video controller a command to switch the display from the personal OS to the secure OS. If execution parameter associated to the selected application and received by the secure OS comprised a "full screen mode" request, the interface will be displayed full screen on the display 400. When the application is later closed by the user, the secure OS may send to the hypervisor layer a message indicating the closing of the application.

In a step 370 the hypervisor layer receives the message indicating that the application has been closed.

In a further step 380, the hypervisor layer then sends a request to the video controller to display the GUI of the personal GUI.

In other words, in the case of closing an application in the secure OS, the hypervisor interface layer immediately switches the view to the personal OS. Thus the user perceives that he stays in his personal OS.

In a step 390, the personal OS may be switched off, possibly inducing the switching off the secure OS at the same time. The electronic device 400 is then switched off.

Finally, the above discussion is intended to be merely illustrative of the present system and should not be construed as limiting the appended claims to any particular embodiment or group of embodiments. Thus, while the present system has been described with reference to exemplary embodiments, such as embodiment described in the different figures, it should also be appreciated that numerous modifications and alternative embodiments may be devised by those having ordinary skill in the art without departing from the broader and intended spirit and scope of the present system as set forth in the claims that follow. Further, while exemplary illustrations were provided to facilitate an understanding of the present system, other system to run an application designed for an Operating System (OS) through the user interface of another OS may be provided in accordance with further embodiments of the present system.

The section headings included herein are intended to facilitate a review but are not intended to limit the scope of the present system. Accordingly, the specification and drawings are to be regarded in an illustrative manner and are not intended to limit the scope of the appended claims.

In interpreting the appended claims, it should be understood that:
a) the word "comprising" does not exclude the presence of other elements or acts than those listed in a given claim;
b) the word "a" or "an" preceding an element does not exclude the presence of a plurality of such elements;
c) any reference signs in the claims do not limit their scope;
d) several "means" may be represented by the same item or hardware or software implemented structure or function;
e) any of the disclosed elements may be comprised of hardware portions (e.g., including discrete and integrated electronic circuitry), software portions (e.g., computer programming), and any combination thereof;
f) hardware portions may be comprised of one or both of analog and digital portions;
g) any of the disclosed devices or portions thereof may be combined together or separated into further portions unless specifically stated otherwise;
h) no specific sequence of acts or steps is intended to be required unless specifically indicated; and
i) the term "plurality of" an element includes two or more of the claimed element, and does not imply any particular range of number of elements; that is, a plurality of elements may be as few as two elements, and may include an immeasurable number of elements.

## Claims

1. A hypervisor intermediate layer executed by an electronic device and interfaced with at least two operating systems (OS) with means to:
- receive a message from a first OS, said message comprising an indication on an application to be executed in a second OS;
- send a message to the second OS, the message comprising a request to execute the application according to preset execution parameters;
- receive a message from the second OS comprising an indication that the application is being executed in a Graphical User Interface of the second OS according to the preset execution parameters;
- send to a hardware layer of the electronic device a command to display the second OS Graphical User Interface.

2. A hypervisor intermediate layer according to claim 1, comprising further means to check the request to execute the application against a security policy to allow or prevent the sending of a command to the second OS.

3. A hypervisor intermediate layer according to claim 1 or 2, comprising further means to start the second OS.

4. A hypervisor intermediate layer according to any preceding claims, the execution parameters comprising a parameter to execute the application in a full screen mode.

5. An electronic device comprising a display screen and executing a hypervisor intermediate layer interfaced with at least two operating systems (OS), the electronic device displaying a Graphical User Interface of a first OS on the display screen, the hypervisor intermediate layer comprising means to:
- receive a message from the first OS, said message comprising indication on an application to be executed in a second OS environment;
- send a command to the application manager of the second OS to execute the application, the command comprising execution parameters;
- receive from the application manager of the second OS an indication that the application is being executed according to requested parameters;
- send to the hardware layer a command to display the second OS output display on the electronic device display screen.

6. A method to manage an application executed in a second OS from a first OS, the method being executed by a hypervisor intermediate layer on an electronic device comprising a display screen, the hypervisor intermediate layer being interfaced with the at least two OS, the method comprising the acts of:
- receiving a message from a first OS, said message comprising indication on an application to be executed in a second OS environment;
- sending a command to the application manager of the second OS to execute the application, the command comprising execution parameters;
- receiving from the application manager of the second OS an indication that the application is being executed according to requested parameters;
- sending to the hardware layer a command to display the second OS output display on the electronic device display screen.

7. An application embodied on a non-transitory computer readable medium and arranged to execute the method of claim 6.
